# EUROPEAN PATENT SPECIFICATION

(11) **EP 2 687 761 B1**
(45) Date of publication and mention of the grant of the patent: **03.01.2018**
(21) Application number: 12760861.0
(22) Date of filing: 19.01.2012
(51) Int. Cl.: F16J 15/324, F16J 15/3264, C10M 171/02, F16C 33/78

(54) **SEALING DEVICE**
DICHTUNGSVORRICHTUNG
DISPOSITIF D'ÉTANCHÉITÉ

(30) Priority: 18.03.2011 JP 2011060410
(43) Date of publication of application: 22.01.2014
(73) Proprietor: NOK Corporation, Tokyo 105-8585 (JP)
(72) Inventor: WATANABE Mitsuo, Fujisawa-shi Kanagawa 251-0042 (JP); SUZUKI Nozomu, Fujisawa-shi Kanagawa 251-0042 (JP); KANZAKI Go, Fukushima-shi Fukushima 960-1102 (JP); KATO Takuya, Fukushima-shi Fukushima 960-1102 (JP)
(74) Representative: TBK
(86) International application number: PCT/JP2012/051023
(87) International publication number: WO 2012/127895

(56) References cited:
- EP-A1- 2 290 269
- EP-A2- 1 378 691
- WO-A1-2006/064908
- WO-A1-2009/144785
- DE-A1- 4 123 392
- JP-A- 2008 069 882
- JP-A- 2010 078 140
- US-A1- 2010 007 090
- US-A1- 2011 018 209
- US-B1- 6 186 507

## Description

### BACKGROUND OF THE INVENTION

### Field of the Invention

The present invention relates to a sealing device, and more particularly to a sealing device having a seal lip which slidably comes into close contact with the other member. The sealing device according to the present invention is used, for example, as a bearing grease seal in an automotive field.

### Description of the Conventional Art

For example, in a bearing unit of a motor vehicle, a sealing device (hereinafter, refer also to as a seal) is used for the purpose of preventing muddy water from intruding from an external portion and sealing a bearing grease.

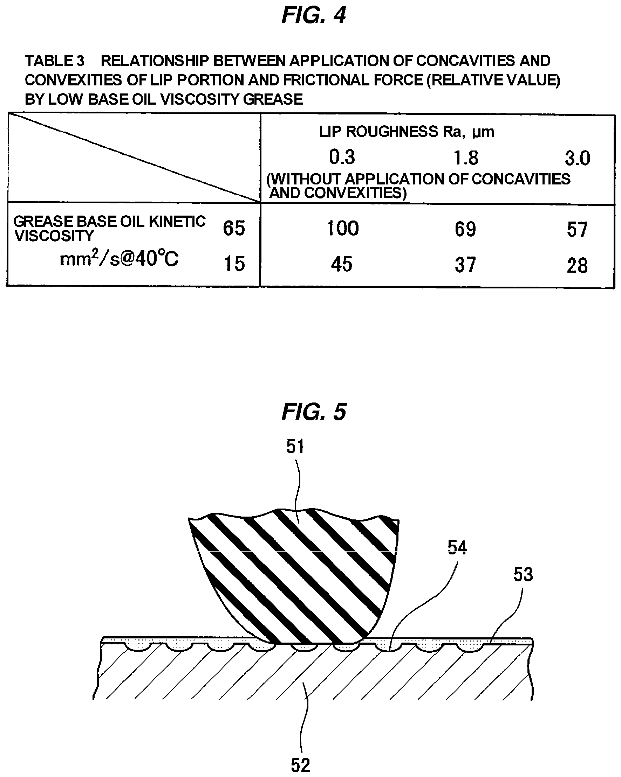

In recent years, it is demanded to make friction low (make torque low) in a target seal as a device for improving a fuel consumption of the motor vehicle. For example, in a prior art shown in Fig. 5, there has been proposed a countermeasure achieved by applying concavities and convexities (dimples) 54 to a lip slidable contact surface (a surface of the other member 52 with which a seal lip 51 slidably comes into close contact) 53 (refer to patent document 1).

However, since the seal lip 51 made of a rubber-like elastic material slides in relation to the concavities and convexities 54 in the case that the concavities and convexities 54 are applied to the lip slidable contact surface 53 as mentioned above, a sliding abrasion of the seal lip 51 is promoted, and there is a problem that a deterioration of a sealing performance is caused.

Further, including the patent document 1 mentioned above, there are the following materials as the prior art documents against the present invention.

However, the inventions described in these documents are all structured such that the concavities and convexities are applied to the lip slidable contact surface (the surface of the other member with which the seal lip slidably comes into close contact) as mentioned above. Accordingly, the inventions are different in structure from the present invention.

### Prior Art Documents

### Patent Documents

Patent Document 1: WO2006/064908A1
Patent Document 2: WO03/091573A1
Patent Document 3: JP 2008 298106 A
Patent Document 4: JP 2010 531966 A
Patent Document 5: US 2011/018209 A1
Patent Document 6: EP 1 378 691 A2
Patent Document 7: DE 41 23 392 A1
Patent Document 8: EP 2 290 269 A1

### SUMMARY OF THE INVENTION

### Problem to be Solved by the Invention

The present invention is made by taking the above points into consideration, and an object of the present invention is to provide a sealing device having a seal lip which slidably comes into close contact with the other member, wherein the sealing device can achieve a low friction in conjunction with the sliding motion, and can suppress the lip abrasion.

### Means for Solving the Problem

This object is achieved by a sealing device having the features of claim 1. Advantageous further developments of the invention are set out in the dependent claims.

In the sealing device of the present invention having the structure mentioned in the claims, the concavities and convexities are applied to the sliding surfaces of the seal lips and the low base oil viscosity grease is supplied to the sliding surfaces

of the seal lips. Here, the application of the concavities and convexities means a matter that the concavities and convexities are previously formed, and the supply of the grease means a matter that the grease carries out a lubricating action in the case of the lip sliding action as a result. The concavities and convexities are micro concavities and convexities.

In the case that the concavities and convexities are applied to the sliding surfaces of the seal lips, a contact area of the seal lips in relation to the other member is reduced, and the grease easily intervenes by the concavities and convexities. Accordingly, a friction force is reduced. Further, since the low base oil viscosity grease is supplied as the grease, the friction force is further reduced. Further, according to the present invention, since the concavities and convexities are applied to the sliding surfaces of the seal lips and are not applied to the surface of the other member, the surface of the other member is formed as a smooth surface which is provided with a normal surface roughness. Therefore, since the seal lip made of the rubber-like elastic material does not slide on the concavo-convex surface but slides on the smooth surface, the seal lip is hard to wear by sliding.

In order to apply the concavities and convexities to the seal lip made of the rubber-like elastic material, it is desirable to form the seal lip by using a metal mold which is processed its surface as concavities and convexities according to a shot blast machining, an electric discharge machining, an emboss machining or a laser beam machining. As a result, it is possible to always provide a stable formed product by appropriately controlling a service life of the metal mold.

Preferably, the other member with which the seal lip slidably comes into close contact is constructed, for example, by the slinger which is obtained by integrally forming the flange portion from the one end in the axial direction of the tubular portion toward the outer side in the diametrical direction, has the half cut cross sectional surface and is formed approximately as the L-shaped form. According to the invention, the seal lip is structured such as to be provided with a first seal lip, a second seal lip and a third seal lip. Preferably, the first seal lip slidably comes into close contact with the end surface of the flange portion in the slinger, the second seal lip slidably comes into close contact with the

outer peripheral surface of the tubular portion, and the third seal lip slidably comes into close contact with the outer peripheral surface of the tubular portion in the same manner in the inner side of the second seal lip. Further, according to the invention, the concavities and convexities are applied to each of the sliding surfaces of the three seal lips, and the low base oil viscosity grease is filled in each of the space between the first seal lip and the second seal lip, and the space between the second seal lip and the third seal lip.

In the conventional sealing device in the patent document 1 mentioned above, the concavities and convexities applied to the surface of the other member is appropriate in the range of the surface roughness between 0.5 and 1.5 µmRa, however, in the case that the concavities and convexities are applied to the sliding surfaces of the seal lips in place of the surface of the other member, like in the present invention, the seal lip tends to be elastically deformed. Accordingly, it is necessary to change the magnitude of the surface roughness. Therefore, as a result of devoting themselves to making a study by the inventors of the present invention, there has been known that it is desirable to make that surface roughness greater than the case mentioned above, that is, between 1.0 and 3.0 µmRa, and preferably set the surface roughness to a range between 1.5 and 3.0 µmRa (corresponding to 10 to 20 µmRz) in the case of taking a practical stage into more consideration, in order to obtain an effect of significantly reducing the frictional force, while maintaining a sealing performance, with regard to the concavities and convexities applied to the sliding surfaces of the seal lips.

On the other hand, with regard to the grease, particularly in the grease having the low base oil kinetic viscosity, since the grease may be dispersed by the sliding motion, and may cause an increase of a frictional resistance, it is desirable to employ the grease in which the base oil kinetic viscosity at 40 ºC is greater than 10 mm2/s. In the grease (in which the base oil kinetic viscosity at 40 ºC is between 60 and 100 mm2/s) which is used as a grease for a general bearing, the low friction by the roughness of the lip portion can be expected, however, in order to obtain a more significant low friction effect, it is desirable to employ a grease in which the base oil kinetic viscosity at 40 ºC is between 10 and 40 mm2/s.

### Effect of the Invention

The present invention achieves the following effects.

In other words, in the sealing device of the present invention, as mentioned above, since the concavities and convexities are applied to the sliding surfaces of the seal lips, the contact area of the seal lip in relation to the other

member is reduced, and the grease easily intervenes by the concavities and convexities. Accordingly, the friction force is reduced. Further, since the low base oil viscosity grease is supplied as the grease, the friction force is further reduced. Further, since the concavities and convexities are applied to the sliding surfaces of the seal lips and are not applied to the surface of the other member, the surface of the other member is formed as the smooth surface which is provided with the normal surface roughness. Therefore, since the seal lip made of the rubber-like elastic material does not slide on the concavo-convex surface but slides on the smooth surface, the seal lip is hard to wear by sliding. As a result, just like the desired purpose of the present invention, it is possible to achieve the low friction in conjunction with the sliding motion in the sealing device having the seal lip which slidably comes into close contact with the other member, and it is possible to provide the sealing device which can suppress the lip abrasion.

### BRIEF EXPLANATION OF THE DRAWINGS

Fig. 1 is a cross sectional view of a substantial part of a sealing device according to an embodiment of the present invention;
Fig. 2 is a table showing a relationship between a surface roughness Ra of a lip portion and a frictional force (a relative value);
Fig. 3 is a table showing a relationship between a concavities and convexities application of the lip portion and a muddy water sealing time;
Fig. 4 is a table showing a relationship between the concavities and convexities application of the lip portion and the frictional force (the relative value) by a low base oil viscosity grease; and
Fig. 5 is a cross sectional view of a substantial part of a sealing device according to a prior art.

### Description of Reference Numerals

11 slinger (other member)
11a, 22a tubular portion
11b, 22b flange portion
11c, 11d end surface
21 seal lip member
22 attaching ring
23 rubber-like elastic body
24 attached rubber portion
25, 26, 27 seal lip
25a, 26a, 27a sliding surface
31, 32 space
A, B, C concavities and convexities applying region

### DETAILED DESCRIPTION OF PREFERRED EMBODIMENTS

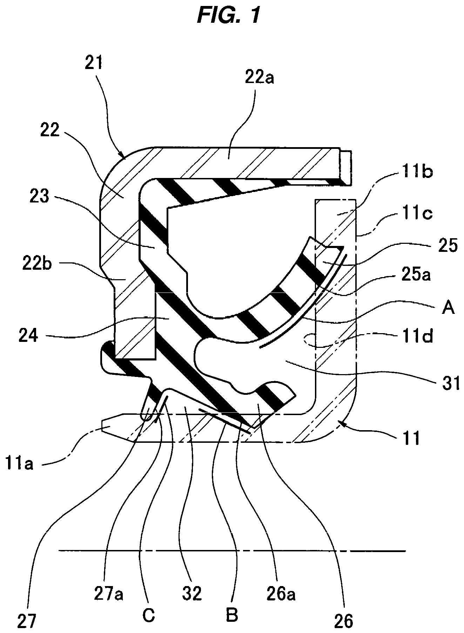

The following embodiments are included in the present invention.
(1) The present invention is characterized in that concavities and convexities are applied to a lip portion of a seal and a low base oil viscosity grease is filled, as shown in Fig. 1.
(2) The present invention relates to a method of making a torque of a bearing grease seal low, and is characterized by a point that a roughness Ra of a surface of a seal lip portion coming into slidable contact with a slinger is adjusted to Ra = 1.0 to 3.0 µm, and is adjusted to Ra = 1.5 to 3.0 µm in the case of taking into more consideration a practical stage. Further, the torque is further lowered by using the grease having the low base oil viscosity at the same time.
(3) The present invention is different in its method from the inventions described in the prior art documents, in a point that the surface roughness in the rubber side is adjusted. The low torque can be achieved by enlarging the surface roughness in the rubber lip side, however, since the surface roughness in the metal member side which comes into slidable contact with the rubber lip side is that of the normal finished surface, there is an advantage that the lip does not wear. Further, since the roughness of the lip is formed by finishing the surface of the metal mold into a predetermined surface roughness and transferring the predetermined surface roughness, there is an advantage that a roughness quality can be secured uniformly. Since the surface of the rubber lip is elastically deformed greatly by the slidable contact with the other metal member, an optimum range of the rubber becomes numerical value range which is different from the roughness of the surface which has been conventionally formed in the metal member side. As is apparent from the embodiment according to the present invention, the optimum range can not be easily derived from the inventions described in the prior art documents.

### Embodiment

Next, a description will be given of an embodiment according to the present invention with reference to the accompanying drawings.

Fig. 1 shows a cross section of a substantial part of a sealing device according to the embodiment of the present invention.

The sealing device in Fig. 1 is used as a bearing grease seal in an automotive field, and is constructed by a combination of a slinger 11 which is installed to a bearing inner ring (not shown) and rotates together with the bearing inner ring, and a seal lip member 21 which is installed to a bearing outer ring (not shown) and slidably comes into close contact with the slinger 11. In the invention, the bearing inner ring may be alternatively constructed by a shaft or a sleeve of a rotary equipment, and the bearing outer ring may be alternatively constructed by a housing of the rotary equipment.

The slinger 11 is made by a metal material, is formed approximately as an L-shaped form in its half cut surface by integrally forming a flange portion 11b (an outward flange portion) in one end portion in an axial direction of a tubular portion 11a toward an outer side in a diametrical direction, and is fitted to an outer peripheral surface of the bearing inner ring with an inner peripheral surface of the tubular portion 11a. A magnetic encoder may be attached to an outer end surface 11c of the flange portion 11b.

The seal lip member 21 is constructed by a combination of an attaching ring 22, and a rubber-like elastic body 23 which is attached to the attaching ring 22. The attaching ring 22 is made of a metal material and is obtained by integrally forming a flange portion (an inward flange portion) 22b in the other end portion in an axial direction of a tubular portion 22a toward an inner side in a diametrical direction, and is fitted to an inner peripheral surface of the bearing outer ring with an outer peripheral surface of the tubular portion 22a. The rubber-like elastic body 23 integrally has an attached rubber portion 24 which is attached to the attaching ring 22, a first seal lip (a side lip) 25 which is supported by the attached rubber portion 24 and slidably comes into close contact with the inner end surface 11d of the flange portion 11b in the slinger 11, a second seal lip (a radial lip) 26 which is supported by the attached rubber portion 24 in the same manner and slidably comes into close contact with the outer peripheral surface of the tubular portion 11a in the slinger 11, and a third seal lip (a grease lip) 27 which is supported by the attached rubber portion 24 in the same manner in an inner side (a machine inner side) of the second seal lip 26 and slidably comes into close contact with the outer peripheral surface of the tubular portion 11a in the slinger 11. Since Fig. 1 draws free states of the seal lips 25, 26 and 27, the slinger 11 corresponding to the other member with which the seal lips 25, 26 and 27 slide is drawn by a virtual chain line.

Among three seal lips 25, 26 and 27 mentioned above, each of the first seal lip 25 and the second seal lip 26 is structured such as to seal so as to prevent the foreign material such as the muddy water in the outer portion of the bearing from intruding into the inner portion of the bearing, and is constructed as an outward lip structure (a structure in which a lip end is directed to the outer portion of the bearing) for the muddy water leakage preventing function. Particularly, the first seal lip 25 is formed such that a diameter thereof is gradually enlarged from its base end toward its leading end. Further, the third seal lip 27 is structured such as to seal so as to prevent the grease in the inner portion of the bearing from leaking out to the outer portion of the bearing, and is constructed as an inward lip structure (a structure in which the lip end is directed to the inner portion of the bearing) for the grease leakage preventing function.

Concavities and convexities (not shown) are applied to each of sliding surfaces 25a, 26a and 27a of three seal lips 25, 26 and 27 mentioned above. The concavities and convexities which are set at a magnitude between 1.0 and 3.0 µmRa are applied. Since the concavities and convexities are formed as a micro shape and can not be illustrated in Fig. 1, regions to which the concavities and convexities are applied are shown by solid lines A, B and C in Fig. 1.

Further, in the case that three seal lips 25, 26 and 27 respectively come into close contact with the slinger 11, a sealed space 31 is formed between the first seal lip 25 and the second seal lip 26, and a sealed space 32 is formed between the second seal lip 26 and the third seal lip 27. In the sealing device, a low base oil viscosity grease (not shown) is filled in each of the spaces 31 and 32 when the sealing device is used. As the low base oil viscosity grease, there is particularly employed a grease in which a base oil kinetic viscosity at 40 ºC is between 10 and 40 mm2/s.

Further, any structure like the concavities and convexities is not applied to the surface of the slinger 11, that is, the surface of the slinger 11 is finished as a smooth surface which is provided with a normal surface roughness.

In the sealing device having the structure mentioned above, the concavities and convexities are applied to the sliding surfaces 25a, 26a and 27a of the respective seal lips 25, 26 and 27, and the low base oil viscosity grease is filled in the spaces 31 and 32 between the seal lips 25, 26 and 27. As a result, the sealing device is structured such that the low base oil viscosity grease is supplied to the sliding surfaces 25a, 26a and 27a of the respective seal lips 25, 26 and 27. In the case that the concavities and convexities are applied to the sliding surfaces 25a, 26a and 27a of the seal lips 25, 26 and 27, the contact areas of the seal lips 25, 26 and 27 with the slinger 11 are reduced, and the grease tends to intervene by the concavities and convexities. Accordingly, it is possible to reduce the frictional force. Further, since the low base oil viscosity grease is supplied as the grease, it is possible to further reduce the frictional force.

Further, according to the sealing device having the structure mentioned above, since the concavities and convexities are applied to the sliding surfaces 25a, 26a and 27a of the seal lips 25, 26 and 27 and are not applied to the surface of the slinger 11, the surface of the slinger 11 is finished as the smooth surface which is provided with the normal surface roughness. Therefore, since the seal lips 25, 26 and 27 which are made of the rubber-like elastic material do not slide on the concavo-convex surface but slide on the smooth surface, it is possible to inhibit the seal lips 25, 26 and 27 from sliding and wearing.

Accordingly, just like the desired purpose of the present invention, it is possible to achieve the low friction in conjunction with the sliding motion in the sealing device having the seal lip which slidably comes into close contact with the other member, and it is possible to provide the sealing device which can suppress the lip abrasion.

Next, a description will be given of specifications of respective numeral values.

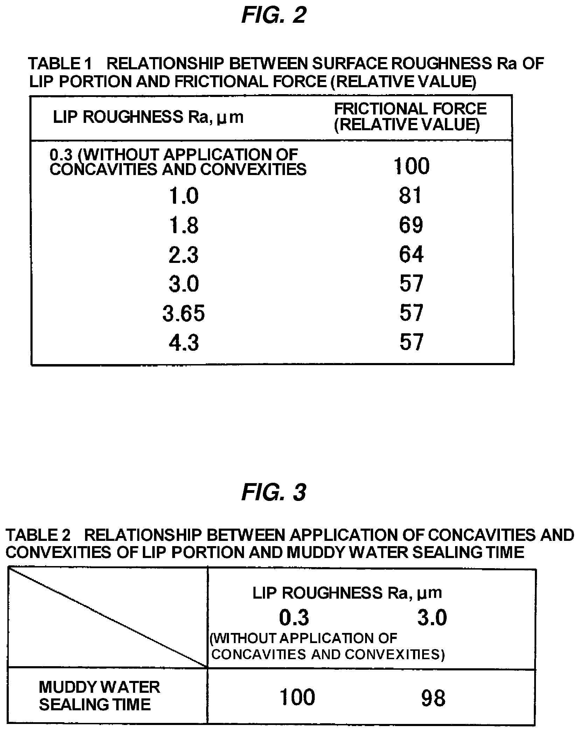

An effect of reducing the friction force by applying the concavities and convexities to the seal lip will be shown in Table 1 (Fig. 2). In a state in which a general bearing grease (in which the base oil kinetic viscosity at 40 ºC is 65 mm2/s) is sealed in the space between the lips, and the lip member is fixed to the housing, the frictional force when the slinger is rotated at a rotating speed 500 rpm is measured. Here, the frictional force is relatively compared on the assumption that the friction force in the seal to which the concavities and convexities are not applied is 100. As a result, as shown in Table 1, the greater the surface roughness of the lip is, the more the frictional force is lowered, and the effect of reducing the frictional force is not changed in a range that the surface roughness is greater than 3.0 µmRa (corresponding to 20 µmRz). Since an excessive roughness application on the lip surface causes the reduction of the sealing performance, it is desirable to set the surface roughness of the lip portion to 1.0 to 3.0 µmRa, for obtaining a significant frictional force reducing effect while maintaining the sealing performance, and it is desirable to set the surface roughness to 1.5 to 3.0 µmRa (corresponding to 10 to 20 µmRz) in the case of taking into more consideration the practical stage.

Further, in order to confirm the influence applied to the sealing performance (particularly the sealing performance against the muddy water intrusion from the external portion in the light of the used environment of the seal) by applying the concavities and convexities to the seal lip, an evaluation by the seal to which the concavo-convex process having the surface roughness 3.0 µmRa is applied is executed. The test is carried out by sealing the general bearing grease (in which the base oil kinetic viscosity at 40 ºC is 65 mm2/s) is sealed into the space between the lips, in a state in which the muddy water (water + loamy powder of the Kanto district JIS8) is dipped into the shaft center of the seal, and turning the slinger at 1000 rpm, and the evaluation is carried out on the basis of the time by which the muddy water intrudes. Results obtained by relatively comparing on the assumption that the muddy water sealing time of the seal to which the concavities and convexities are not applied is 100 will be shown in Table 2 (Fig. 3). Even in the seal to which the concavities and convexities having the surface roughness 3.0 µmRa are applied, the sealing performance against the muddy water is equal to that of the seal to which the concavities and convexities are not applied, so that it can be said that it is possible to obtain the low friction effect while maintaining the sealing performance as long as the roughness is equal to or less than 3.0 µmRa.

Subsequently, the effect of reducing the frictional force by applying the concavities and convexities to the seal lip and using the low base oil viscosity grease will be shown in Table 3 (Fig. 4). The test condition is the same as that shown in Table 1, and the friction force of the seal to which the concavities and convexities are not applied while using the grease in which the base oil kinetic viscosity at 40 ºC is 65 mm2/s is assumed to be 100. As a result, it is possible to expect a wider effect of reducing the friction by using the low base oil viscosity grease in addition to the application of the concavities and convexities to the lip. According to the low friction, it is possible to expect an improvement of the fuel consumption on the basis of the reduction of the friction loss and an improvement of a seal service life on the basis of the suppression of the abrasion.

## Claims

1. A sealing device having a seal lip (25, 26, 27) which is provided with a first seal lip (25), a second seal lip (26) and a third seal lip (27), and which seal lip, in use, is capable of slidably coming into close contact with the other member (11), and which device is further provided with a low base oil viscosity grease,
wherein concavities and convexities are formed on each of the sliding surfaces (25a, 26a, 27a) of said seal lips (25, 26, 27) and the low base oil viscosity grease is supplied to the sliding surfaces (25a, 26a, 27a) of said seal lips (25, 26, 27) and is filled in each of spaces (31, 32) among the three seal lips (25, 26, 27), for simultaneously achieving a reduction of a frictional force in the sliding motion and a suppression of the lip abrasion; **characterized in that**
said concavities and convexities have a magnitude between 1.0 and 3.0 µmRa, and
said low base oil viscosity grease is a grease in which a base oil kinetic viscosity at 40°C is between 10 and 40 mm²/s.

2. The sealing device according to claim 1, wherein said concavities and convexities have a magnitude between 1.5 and 3.0 µmRa.

3. The sealing device according to claim 1, wherein in use, said other member is constructed by a slinger (11) which is obtained by integrally forming a flange portion (11b) from one end in an axial direction of a tubular portion (11a) toward an outer side in a diametrical direction, has a half cut cross sectional surface and is formed approximately as an L-shaped form,
wherein said first seal lip (25) slidably comes into close contact with an end surface of said flange portion (11b), said second seal lip (26) slidably comes into close contact with an outer peripheral surface of said tubular portion (11a), and said third seal lip (27) slidably comes into close contact with an outer peripheral surface of said tubular portion (11a) in the same manner in an inner side of said second seal lip (26).

## Patentansprüche

1. Dichtungsvorrichtung mit einer Dichtungslippe (25, 26, 27), die mit einer ersten Dichtungslippe (25), einer zweiten Dichtungslippe (26) und einer dritten Dichtungslippe (27) versehen ist, und wobei die Dichtungslippe, in Verwendung, imstande ist, mit dem anderen Element (11) gleitbar in engen Kontakt zu kommen, und wobei die Vorrichtung ferner mit einem Fett mit niedriger Grundölviskosität versehen ist,
wobei Konkavitäten und Konvexitäten auf jeder der Gleitflächen (25a, 26a, 27a) der Dichtungslippen (25, 26, 27) ausgebildet sind und das Fett mit niedriger Grundölviskosität zu den Gleitflächen (25a, 26a, 27a) der Dichtungslippen (25, 26, 27) zugeführt wird und in jeden der Räume (31, 32) unter den drei Dichtungslippen (25, 26, 27) gefüllt wird, um gleichzeitig ein Reduzieren einer Reibungskraft bei der Gleitbewegung und ein Unterdrücken des Lippenabriebs zu erreichen; **dadurch gekennzeichnet, dass**
die Konkavitäten und Konvexitäten eine Größe zwischen 1,0 und 3,0 µmRa haben, und
das Fett mit niedriger Grundölviskosität ein Fett ist, bei dem eine kinematische Grundölviskosität bei 40°C zwischen 10 und 40 mm²/s ist.

2. Dichtungsvorrichtung nach Anspruch 1, wobei die Konkavitäten und Konvexitäten eine Größe zwischen 1,5 und 3,5 µmRa haben.

3. Dichtungsvorrichtung nach Anspruch 1, wobei, in Verwendung, das andere Element durch einen Ölschleuderring (11) eingerichtet ist, der erlangt wird, indem ein Flanschabschnitt (11b) von einem Ende in einer Axialrichtung eines rohrförmigen Abschnitts (11a) in Richtung einer Außenseite in einer diametralen Richtung einstückig ausgebildet wird, eine halbgeschnittene Querschnittsfläche hat, und näherungsweise als ein L-förmiges Profil ausgebildet ist,
wobei die erste Dichtungslippe (25) mit einer Endfläche des Flanschabschnitts (11b) gleitbar in engen Kontakt kommt, die zweite Dichtungslippe (26) mit einer Außenumfangsfläche des rohrförmigen Abschnitts (11a) gleitbar in engen Kontakt kommt, und die dritte Dichtungslippe (27) mit einer Außenumfangsfläche des rohrförmigen Abschnitts (11a) in der gleichen Weise auf einer Innenseite der zweiten Dichtungslippe (26) gleitbar in engen Kontakt kommt.

## Revendications

1. Dispositif d'étanchéité ayant une lèvre de joint d'étanchéité (25, 26, 27) qui est prévue avec une première lèvre de joint d'étanchéité (25), une deuxième lèvre de joint d'étanchéité (26) et une troisième lèvre de joint d'étanchéité (27), et laquelle lèvre de joint d'étanchéité, à l'usage, peut venir en coulissant en contact immédiat avec l'autre élément (11), et lequel dispositif est en outre prévu avec une graisse à faible viscosité d'huile de base,
dans lequel des concavités et des convexités sont formées sur chacune des surfaces coulissantes (25a, 26a, 27a) desdites lèvres de joint d'étanchéité (25, 26, 27) et la graisse à faible viscosité d'huile de base est amenée aux surfaces coulissantes (25a, 26a, 27a) desdites lèvres de joint d'étanchéité (25, 26, 27) et est déversée dans chacun des espaces (31, 32) parmi les trois lèvres de joint d'étanchéité (25, 26, 27) pour obtenir simultanément une réduction d'une force de friction dans le mouvement coulissant et une suppression de l'abrasion de lèvre ; **caractérisé en ce que** :
lesdites concavités et convexités ont une grandeur comprise entre 1,0 et 3,0 µmRa, et
ladite graisse à faible viscosité d'huile de base est une graisse dans laquelle une viscosité cinétique d'huile de base à 40 °C est comprise entre 10 et 40 mm²/s.

2. Dispositif d'étanchéité selon la revendication 1, dans lequel lesdites concavités et convexités ont une grandeur comprise entre 1,5 et 3,0 µmRa.

3. Dispositif d'étanchéité selon la revendication 1, dans lequel, à l'usage, ledit autre élément est construit par une élingue (11) qui est obtenue en formant, de manière solidaire, une partie de bride (11b) à partir d'une extrémité dans une direction axiale d'une partie tubulaire (11a) vers un côté externe dans une direction diamétrale, a une surface transversale à moitié coupée et est formée approximativement selon une forme de L,
dans lequel ladite première lèvre de joint d'étanchéité (25) vient, en coulissant, en contact immédiat avec une surface d'extrémité de ladite partie de bride (11b), ladite deuxième lèvre de joint d'étanchéité (26) vient, en coulissant, en contact immédiat avec une surface périphérique externe de ladite partie tubulaire (11a), et ladite troisième lèvre de joint d'étanchéité (27) vient, en coulissant, en contact immédiat avec une surface périphérique externe de ladite partie tubulaire (11a) de la même manière dans un côté interne de ladite deuxième lèvre de joint d'étanchéité (26).
